(19) **Europäisches Patentamt**
**European Patent Office**
**Office européen des brevets**

(11) **EP 2 050 793 A2**

(12) **EUROPEAN PATENT APPLICATION**

(43) Date of publication:
**22.04.2009 Bulletin 2009/17**

(51) Int Cl.:
***C08L 101/00*** *(2006.01)*

(21) Application number: **09000423.5**

(22) Date of filing: **24.12.2004**

(84) Designated Contracting States:
**AT BE BG CH CY CZ DE DK EE ES FI FR GB GR HU IE IS IT LI LT LU MC NL PL PT RO SE SI SK TR**

(30) Priority: **24.12.2003 US 532491 P**

(62) Document number(s) of the earlier application(s) in accordance with Art. 76 EPC:
**04815432.2 / 1 699 882**

(71) Applicant: **DOW GLOBAL TECHNOLOGIES INC. Midland MI 48674 (US)**

(72) Inventors:
  • **Chaudhary, Bharat I. Princeton, NJ 08540 (US)**

  • **Chopin, Lamy J. Flemington, NJ 08822 (US)**
  • **Klier, John Midland, MI 48642 (US)**
  • **Peterson, Thomas H. Kennewick, WA 99338 (US)**

(74) Representative: **Chung, Hsu Min Boult Wade Tennant Verulam Gardens 70 Gray's Inn Road London WC1X 8BT (GB)**

Remarks:
This application was filed on 14-01-2009 as a divisional application to the application mentioned under INID code 62.

(54) **Free-radical initiation in the precence of a stable organic free radical and related compositions**

(57)    A polymeric composition consisting essentially of (a) a free-radical degradable polymer, (b) a graftable stable organic free radical being a graftable, functionalized derivative of 2,2,6,6-tetramethyl piperindinyl oxy, and (c) an organic peroxide, being a dialkyl peroxide subject to formation of methyl radicals to a lesser degree than dicumyl peroxide at the free-radical reaction temperature, wherein (i) the graftable, stable organic free radical suppresses degradation of the polymer in the presence of the organic peroxide and (ii) the graftable stable organic free radical is graftable onto the polymer after the polymer forms a free radical.

FIGURE 1

**Description**

FIELD OF THE INVENTION

This invention relates to polymer systems that undergo free radical reactions, wherein organic peroxides are used to generate the free-radicals and a stable organic free radical mediates the free-radical reactions.

DESCRIPTION OF THE PRIOR ART

A number of polymers can undergo free radical reactions. Some of those reactions are detrimental such as degrading, premature carbon-carbon crosslinking, or carbon-carbon crosslinking generally. Stable organic free radicals, as described in patent applications filed concurrently herewith, can be used to mediate these free-radical reactions.
It is desirable to further control these free-radical reactions, thereby increasing the efficiency of the desired reactions. It is desirable to select an organic peroxide that facilitates better control of the free-radical reactions. It is particularly desirable that the organic peroxide be useful when the stable organic free radical is grafted onto the polymer. In this manner, various functional groups (hydroxyl, amine, carboxyl, urethane, etc) can be attached to the stable organic free radical and thus used to functionalize a variety of polymers such as polyethylene, polypropylene and polystyrene using conventional free radical chemistries.

SUMMARY OF THE INVENTION

The present invention is an improved polymeric composition comprising a free-radical reactive polymer, an organic peroxide, and a graftable stable organic free radical. The present invention permits suppression of an undesirable degradation or carbon-carbon crosslinking reaction while permitting the polymer to undergo the desirable grafting reaction.
The present invention is useful in wire-and-cable, footwear, film (e.g. greenhouse, shrink, and elastic), engineering thermoplastic, highly-filled, flame retardant, reactive compounding, thermoplastic elastomer, thermoplastic vulcanizate, automotive, vulcanized rubber replacement, construction, automotive, furniture, foam, wetting, adhesive, paintable substrate, dyeable polyolefin, moisture-cure, nanocomposite, compatibilizing, wax, calendered sheet, medical, dispersion, coextrusion, cement/plastic reinforcement, food packaging, non-woven, paper-modification, multilayer container, sporting good, oriented structure, and surface treatment applications.

BRIEF DESCRIPTION OF DRAWING

Figure 1 shows MDR torque data for 4-hydroxy-TEMPO-grafted polymer compositions having various amounts of Luperox 130 organic peroxide and dicumyl peroxide.
Figure 2 shows the percent of grafted 4-hydroxy-TEMPO as determined by NMR data for 4-hydroxy-TEMPO-grafted polymer compositions.
Figure 3 shows the amount of methylation as determined by NMR data for 4-hydroxy-TEMPO-grafted polymer compositions.

DESCRIPTION OF THE INVENTION

"Constrained geometry catalyst catalyzed polymer", "CGC-catalyzed polymer" or similar term, as used herein, means any polymer that is made in the presence of a constrained geometry catalyst. "Constrained geometry catalyst" or "CGC," as used herein, has the same meaning as this term is defined and described in U.S. Patent Nos. 5,272,236 and 5,278,272.
"Long Chain Branching (LCB)," as used herein, means, for example, with ethylene/alpha-olefin copolymers, a chain length longer than the short chain branch that results from the incorporation of the alpha-olefin(s) into the polymer backbone. Each long chain branch has the same comonomer distribution as the polymer backbone and can be as long as the polymer backbone to which it is attached.
"Metallocene," as used herein, means a metal-containing compound having at least one substituted or unsubstituted cyclopentadienyl group bound to the metal. "Metallocene-catalyzed polymer" or similar term means any polymer that is made in the presence of a metallocene catalyst.
"Polydisperity", "molecular weight distribution", and similar terms, as used herein, means a ratio ($M_w/M_n$) of weight average molecular weight ($M_w$) to number average molecular weight ($M_n$).

"Polymer," as used herein, means a macromolecular compound prepared by polymerizing monomers of the same or different type. "Polymer" includes homopolymers, copolymers, terpolymers, interpolymers, and so on. The term "interpolymer" means a polymer prepared by the polymerization of at least two types of monomers or comonomers. It includes, but is not limited to, copolymers (which usually refers to polymers prepared from two different types of monomers or comonomers, although it is often used interchangeably with "interpolymer" to refer to polymers made from three or more different types of monomers or comonomers), terpolymers (which usually refers to polymers prepared from three different types of monomers or comonomers), tetrapolymers (which usually refers to polymers prepared from four different types of monomers or comonomers), and the like. The terms "monomer" or "comonomer" are used interchangeably, and they refer to any compound with a polymerizable moiety which is added to a reactor in order to produce a polymer. In those instances in which a polymer is described as comprising one or more monomers, e.g., a polymer comprising propylene and ethylene, the polymer, of course, comprises units derived from the monomers, e.g., $-CH_2-CH_2-$, and not the monomer itself, e.g., $CH_2=CH_2$.

"P/E* copolymer" and similar terms, as used herein, means a propylene/unsaturated comonomer copolymer characterized as having at least one of the following properties: (i) $^{13}$C NMR peaks corresponding to a regio-error at about 14.6 and about 15.7 ppm, the peaks of about equal intensity and (ii) a differential scanning calorimetry (DSC) curve with a $T_{me}$ that remains essentially the same and a $T_{peak}$ that decreases as the amount of comonomer, i.e., the units derived from ethylene and/or the unsaturated comonomer(s), in the copolymer is increased. "$T_{me}$" means the temperature at which the melting ends. "$Tp_{eak}$" means the peak melting temperature. Typically, the copolymers of this embodiment are characterized by both of these properties. Each of these properties and their respective measurements are described in detail in United States Patent Application Serial No. 10/139,786, filed May 5, 2002 (WO2003040442) which is incorporated herein by reference.

These copolymers can be further characterized further as also having a skewness index, $S_{ix}$, greater than about -1.20. The skewness index is calculated from data obtained from temperature-rising elution fractionation (TREF). The data is expressed as a normalized plot of weight fraction as a function of elution temperature. The molar content of isotactic propylene units that primarily determines the elution temperature.

A prominent characteristic of the shape of the curve is the tailing at lower elution temperature compared to the sharpness or steepness of the curve at the higher elution temperatures. A statistic that reflects this type of asymmetry is skewness. Equation 1 mathematically represents the skewness index, $S_{ix}$, as a measure of this asymmetry.

$$S_{ix} = \frac{\sqrt[3]{\sum w_i * (T_i - T_{Max})^3}}{\sqrt{\sum w_i * (T_i - T_{Max})^2}}$$
Equation 1.

The value, $T_{max}$, is defined as the temperature of the largest weight fraction eluting between 50 and 90 degrees C in the TREF curve. $T_i$ and $w_i$ are the elution temperature and weight fraction respectively of an arbitrary, $i^{th}$ fraction in the TREF distribution. The distributions have been normalized (the sum of the $w_i$ equals 100%) with respect to the total area of the curve eluting above 30 degrees C. Thus, the index reflects only the shape of the crystallized polymer. Any uncrystallized polymer (polymer still in solution at or below 30 degrees C) is omitted from the calculation shown in Equation 1.

The unsaturated comonomers for P/E* copolymers include $C_{4-20}$ $\alpha$-olefins, especially $C_{4-12}$ $\alpha$-olefins such as 1-butene, 1-pentene, 1-hexene, 4-methyl-1-pentene, 1-heptene, 1-octene, 1-decene, 1-dodecene and the like; $C_{4-20}$ diolefins, preferably 1,3-butadiene, 1,3-pentadiene, norbornadiene, 5-ethylidene-2-norbomene (ENB) and dicyclopentadiene; $C_{8-40}$ vinyl aromatic compounds including sytrene, o-, m-, and p-methylstyrene, divinylbenzene, vinylbiphenyl, vinylnapthalene; and halogen-substituted $C_{8-40}$ vinyl aromatic compounds such as chlorostyrene and fluorostyrene. Ethylene and the $C_{4-12}$ $\alpha$-olefins are the preferred comonomers, and ethylene is an especially preferred comonomer.

P/E* copolymers are a unique subset of P/E copolymers. P/E copolymers include all copolymers of propylene and an unsaturated comonomer, not just P/E* copolymers. P/E copolymers other than P/E* copolymers include metallocene-catalyzed copolymers, constrained geometry catalyst catalyzed copolymers, and Z-N-catalyzed copolymers. For purposes of this invention, P/E copolymers comprise 50 weight percent or more propylene while EP (ethylene-propylene) copolymers comprise 51 weight percent or more ethylene. As here used, "comprise ... propylene", "comprise ... ethylene" and similar terms mean that the polymer comprises units derived from propylene, ethylene or the like as opposed to the compounds themselves.

"Propylene homopolymer" and similar terms mean a polymer consisting solely or essentially all of units derived from propylene. "Polypropylene copolymer" and similar terms mean a polymer comprising units derived from propylene and ethylene and/or one or more unsaturated comonomers.

"Ziegler-Natta-catalyzed polymer," "Z-N-catalyzed polymer," or similar term means any polymer that is made in the presence of a Ziegler-Natta catalyst.

In one embodiment, the present invention is a polymeric composition, which comprises a free-radical reactive polymer, an organic peroxide having a half-life, measured at 130 degrees Celsius or greater, longer than that of dicumyl peroxide, and a graftable stable organic free radical.

Free-radical reactive polymers include free-radical degradable polymers and free-radical crosslinkable polymers. When the free-radical reactive polymer is a free-radical degradable polymer, the polymer undergoes a degradation reaction in the absence of a stable organic free radical and when induced by the organic peroxide. The degradation reaction can be chain scission or dehydrohalogenation. The stable organic free radical substantially suppresses the degradation reaction and is graftable onto the polymer after the polymer forms a free radical.

When the free-radical reactive polymer is a free-radical crosslinkable polymer, the polymer undergoes a carbon-carbon crosslinking reaction in the absence of a stable organic free radical and when induced by the organic peroxide. The free radical trapping species substantially suppresses the carbon-carbon crosslinking reaction and is graftable onto the polymer after the polymer forms a free radical.

A variety of free-radical degradable polymers is useful in the present invention as the polymer. The free-radical degradable polymer can be hydrocarbon-based. Suitable free-radical degradable, hydrocarbon-based polymers include butyl rubber, polyacrylate rubber, polyisobutene, propylene homopolymers, propylene copolymers, styrene/ butadiene/ styrene block copolymers, styrene/ ethylene/ butadiene/ styrene copolymers, polymers of vinyl aromatic monomers, vinyl chloride polymers, and blends thereof.

Preferably, the free-radical degradable, hydrocarbon-based polymer is selected from the group consisting of isobutene, propylene, and styrene polymers.

Preferably, the butyl rubber of the present invention is a copolymer of isobutylene and isoprene. The isoprene is typically used in an amount between about 1.0 weight percent and about 3.0 weight percent.

Examples of propylene polymers useful in the present invention include propylene homopolymers and P/E copolymers. In particular, these propylene polymers include polypropylene elastomers. The propylene polymers can be made by any process and can be made by Zeigler-Natta, CGC, metallocene, and nonmetallocene, metal-centered, heteroaryl ligand catalysis.

Useful propylene copolymers include random, block and graft copolymers. Exemplary propylene copolymers include Exxon-Mobil VISTAMAX, Mitsui TAFMER, and VERSIFY™ by The Dow Chemical Company. The density of these copolymers is typically at least about 0.850, preferably at least about 0.860 and more preferably at least about 0.865, grams per cubic centimeter ($g/cm^3$).

Typically, the maximum density of these propylene copolymers is about 0.915, preferably the maximum is about 0.900 and more preferably the maximum is about 0.890 $g/cm^3$. The weight average molecular weight (Mw) of these propylene copolymers can vary widely, but typically it is between about 10,000 and 1,000,000. The polydispersity of these copolymers is typically between about 2 and about 4.

These propylene copolymers typically have a melt flow rate (MFR) of at least about 0.01, preferably at least about 0.05, and more preferably at least about 0.1. The maximum MFR typically does not exceed about 2,000, preferably it does not exceed about 1000, more preferably it does not exceed about 500, further more preferably it does not exceed about 80 and most preferably it does not exceed about 50. MFR for copolymers of propylene and ethylene and/or one or more $C_4$-$C_{20}$ α-olefins is measured according to ASTM D-1238, condition L (2.16 kg, 230 degrees C).

Styrene/butadiene/styrene block copolymers useful in the present invention are a phase-separated system. Styrene/ethylenelbutadiene/styrene copolymers are also useful in the present invention.

Polymers of vinyl aromatic monomers are useful in the present invention. Suitable vinyl aromatic monomers include, but are not limited to, those vinyl aromatic monomers known for use in polymerization processes, such as those described in U.S. Patent Nos. 4,666,987; 4,572,819 and 4,585,825.

Preferably, the monomer is of the formula:

$$\text{Ar}-\overset{\overset{\textstyle R'}{\vert}}{\text{C}}=\text{CH}_2$$

wherein R' is hydrogen or an alkyl radical containing three carbons or less, Ar is an aromatic ring structure having from 1 to 3 aromatic rings with or without alkyl, halo, or haloalkyl substitution, wherein any alkyl group contains 1 to 6 carbon atoms and haloalkyl refers to a halo substituted alkyl group. Preferably, Ar is phenyl or alkylphenyl, wherein alkylphenyl refers to an alkyl substituted phenyl group, with phenyl being most preferred. Typical vinyl aromatic monomers which can be used include: styrene, alpha-methylstyrene, all isomers of vinyl toluene, especially para-vinyltoluene, all isomers of ethyl styrene, propyl styrene, vinyl biphenyl, vinyl naphthalene, vinyl anthracene and the like, and mixtures thereof.

The vinyl aromatic monomers may also be combined with other copolymerizable monomers. Examples of such monomers include, but are not limited to acrylic monomers such as acrylonitrile, methacrylonitrile, methacrylic acid, methyl methacrylate, acrylic acid, and methyl acrylate; maleimide, phenylmaleimide, and maleic anhydride. In addition, the polymerization may be conducted in the presence of predissolved elastomer to prepare impact modified, or grafted rubber containing products, examples of which are described in U.S. Patent Nos. 3,123,655, 3,346,520, 3,639,522, and 4,409,369.

The present invention is also applicable to the rigid, matrix or continuous phase polymer of rubber-modified monovinylidene aromatic polymer compositions.

A variety of free-radical carbon-carbon crosslinkable polymers is useful in the present invention as the polymer. The polymer can be hydrocarbon-based. Suitable free-radical carbon-carbon crosslinkable, hydrocarbon-based polymers include acrylonitrile butadiene styrene rubber, chloroprene rubber, chlorosulfonated polyethylene rubber, ethylene/ alpha-olefin copolymers, ethylene/diene copolymer, ethylene homopolymers, ethylene/propylene/diene monomers, ethylene/propylene rubbers, ethylene/styrene interpolymers, ethylene/unsaturated ester copolymers, fluoropolymers, halogenated polyethylenes, hydrogenated nitrile butadiene rubber, natural rubber, nitrile rubber, polybutadiene rubber, silicone rubber, styrene/butadiene rubber, styrene/ butadiene/ styrene block copolymers, styrene/ ethylene/ butadiene/ styrene copolymers, and blends thereof.

For the present invention, chloroprene rubbers are generally polymers of 2-chloro-1,3-butadiene. Preferably, the rubber is produced by an emulsion polymerization. Additionally, the polymerization can occur in the presence of sulfur to incorporate crosslinking in the polymer.

Preferably, the free-radical carbon-carbon crosslinkable, hydrocarbon-based polymer is an ethylene polymer.

With regard to the suitable ethylene polymers, the polymers generally fall into four main classifications: (1) highly-branched; (2) heterogeneous linear; (3) homogeneously branched linear; and (4) homogeneously branched substantially linear. These polymers can be prepared with Ziegler-Natta catalysts, metallocene or vanadium-based single-site catalysts, or constrained geometry single-site catalysts.

Highly branched ethylene polymers include low density polyethylene (LDPE). Those polymers can be prepared with a free-radical initiator at high temperatures and high pressure. Alternatively, they can be prepared with a coordination catalyst at high temperatures and relatively low pressures. These polymers have a density between about 0.910 grams per cubic centimeter and about 0.940 grams per cubic centimeter as measured by ASTM D-792.

Heterogeneous linear ethylene polymers include linear low density polyethylene (LLDPE), ultra-low density polyethylene (ULDPE), very low density polyethylene (VLDPE), and high density polyethylene (HDPE). Linear low density ethylene polymers have a density between about 0.850 grams per cubic centimeter and about 0.940 grams per cubic centimeter and a melt index between about 0.01 to about 100 grams per 10 minutes as measured by ASTM 1238, condition I. Preferably, the melt index is between about 0.1 to about 50 grams per 10 minutes. Also, preferably, the LLDPE is an interpolymer of ethylene and one or more other alphaolefins having from 3 to 18 carbon atoms, more preferably from 3 to 8 carbon atoms. Preferred comonomers include 1-butene, 4-methyl-1-pentene, 1-hexene, and 1-octene.

Ultra-low density polyethylene and very low density polyethylene are known interchangeably. These polymers have a density between about 0.870 grams per cubic centimeter and about 0.910 grams per cubic centimeter. High density ethylene polymers are generally homopolymers with a density between about 0.941 grams per cubic centimeter and about 0.965 grams per cubic centimeter.

Homogeneously branched linear ethylene polymers include homogeneous LLDPE. The uniformly branched/ homogeneous polymers are those polymers in which the comonomer is randomly distributed within a given interpolymer molecule and wherein the interpolymer molecules have a similar ethylene/comonomer ratio within that interpolymer.

Homogeneously-branched substantially linear ethylene polymers include (a) homopolymers of $C_2$-$C_{20}$ olefins, such as ethylene, propylene, and 4-methyl-1-pentene, (b) interpolymers of ethylene with at least one $C_3$-$C_{20}$ alpha-olefin, $C_2$-$C_{20}$ acetylenically unsaturated monomer, $C_4$-$C_{18}$ diolefin, or combinations of the monomers, and (c) interpolymers of ethylene with at least one of the $C_3$-$C_{20}$ alphaolefins, diolefins, or acetylenically unsaturated monomers in combination with other unsaturated monomers. These polymers generally have a density between about 0.850 grams per cubic centimeter and about 0.970 grams per cubic centimeter. Preferably, the density is between about 0.85 grams per cubic centimeter and about 0.955 grams per cubic centimeter, more preferably, between about 0.850 grams per cubic centimeter and 0.920 grams per cubic centimeter.

Ethylene/styrene interpolymers useful in the present invention include substantially random interpolymers prepared by polymerizing an olefin monomer (i.e., ethylene, propylene, or alpha-olefin monomer) with a vinylidene aromatic monomer, hindered aliphatic vinylidene monomer, or cycloaliphatic vinylidene monomer. Suitable olefin monomers contain from 2 to 20, preferably from 2 to 12, more preferably from 2 to 8 carbon atoms. Preferred such monomers include ethylene, propylene, 1-butene, 4-methyl-1-pentene, 1-hexene, and 1-octene. Most preferred are ethylene and a combination of ethylene with propylene or $C_{4-8}$ alphaolefins. Optionally, the ethylene/styrene interpolymers polymerization components can also include ethylenically unsaturated monomers such as strained ring olefins. Examples of strained ring olefins include norbornene and $C_{1-10}$ alkyl- or $C_{6-10}$ aryl-substituted norbornenes.

Ethylene/unsaturated ester copolymers useful in the present invention can be prepared by conventional high-pressure techniques. The unsaturated esters can be alkyl acrylates, alkyl methacrylates, or vinyl carboxylates. The alkyl groups can have 1 to 8 carbon atoms and preferably have 1 to 4 carbon atoms. The carboxylate groups can have 2 to 8 carbon atoms and preferably have 2 to 5 carbon atoms. The portion of the copolymer attributed to the ester comonomer can be in the range of about 5 to about 50 percent by weight based on the weight of the copolymer, and is preferably in the range of about 15 to about 40 percent by weight. Examples of the acrylates and methacrylates are ethyl acrylate, methyl acrylate, methyl methacrylate, t-butyl acrylate, n-butyl acrylate, n-butyl methacrylate, and 2-ethylhexyl acrylate. Examples of the vinyl carboxylates are vinyl acetate, vinyl propionate, and vinyl butanoate. The melt index of the ethylene/ unsaturated ester copolymers can be in the range of about 0.5 to about 50 grams per 10 minutes.

Halogenated ethylene polymers useful in the present invention include fluorinated, chlorinated, and brominated olefin polymers. The base olefin polymer can be a homopolymer or an interpolymer of olefins having from 2 to 18 carbon atoms. Preferably, the olefin polymer will be an interpolymer of ethylene with propylene or an alpha-olefin monomer having 4 to 8 carbon atoms. Preferred alpha-olefin comonomers include 1-butene, 4-methyl-1-pentene, 1-hexene, and 1-octene. Preferably, the halogenated olefin polymer is a chlorinated polyethylene.

Natural rubbers suitable in the present invention include high molecular weight polymers of isoprene. Preferably, the natural rubber will have a number average degree of polymerization of about 5000 and a broad molecular weight distribution.

Preferably, the nitrile rubber of the present invention is a random copolymer of butadiene and acrylonitrile.

The polybutadiene rubber useful in the present invention is preferably a homopolymer of 1,4-butadiene.

Useful styrene/butadiene rubbers include random copolymers of styrene and butadiene. Typically, these rubbers are produced by free radical polymerization. Styrene/butadiene/styrene block copolymers of the present invention are a phase-separated system. The styrene/ethylene/butadiene/styrene copolymers are also useful in the present invention.

Examples of organic peroxides useful in the present invention include dialkyl peroxides. Preferably, the organic peroxide is a dialkyl peroxide selected from the group consisting of 2,5-bis(tert-butylperoxy)-2,5-dimethylhexane and 2,5-bis(tert-butylperoxy)-2,5-dimethyl-3-hexyne. More preferably, the organic peroxide is 2,5-bis(tert-butylperoxy)-2,5-dimethyl-3-hexyne.

The organic peroxide can be added via direct injection. Preferably, the free-radical inducing species is present in an amount between about 0.005 weight percent and about 20.0 weight percent, more preferably, between about 0.01 weight percent and about 10.0 weight percent, most preferably, between about 0.03 weight percent and about 5.0 weight percent.

Useful stable organic free radicals for use in the present invention include hindered amine-derived stable organic free radicals. When the stable organic free radical is a hindered amine-derived stable organic free radical, it is preferably a hydroxy-derivative of 2,2,6,6,-tetramethyl piperidinyl oxy (TEMPO). More preferably, the free-radical trapping species is 4-hydroxy-TEMPO or a bis-TEMPO. An example of a bis-TEMPO is bis(1-oxyl-2,2,6,6-tetramethylpiperidine-4-yl) sebacate. Also, the stable organic free radical can be a multi-functional molecule having at least two nitroxyl groups derived from oxo-TEMPO, 4-hydroxy-TEMPO, an ester of 4-hydroxy-TEMPO, polymer-bound TEMPO, PROXYL, DOXYL, ditertiary butyl N oxyl, dimethyl diphenylpyrrolidine-1-oxyl, or 4 phosphonoxy TEMPO. Various functional groups (for example, hydroxyl, amine, carboxyl, urethane, etc) can be attached to the stable organic free radical and thus used to functionalize a variety of polymers such as polyethylene, polypropylene and polystyrene using conventional free radical chemistries. This functionality can be used to impart desired performance benefits such as (but not limited to) paintability, dyeability, crosslinkability, etc.

Preferably, the stable organic free radical is present in an amount between about 0.005 weight percent and about 20.0 weight percent, more preferably, between about 0.01 weight percent and about 10.0 weight percent, most preferably, between about 0.03 weight percent and about 5.0 weight percent.

Preferably, the ratio of the organic peroxide to the stable organic free radical and the concentration of the stable organic free radical promote the desired grafting reaction. More preferably, the organic peroxide to the stable organic free radical are present in a ratio greater than about 1, more preferably, between about 20:1 to about 1:1.

The organic peroxide and the stable organic free radical can be combined with the polymer in a variety of ways, including direct compounding, direct soaking, and direct injection.

In an alternate embodiment, the present invention is a polymeric composition, which comprises a free-radical reactive polymer, an organic peroxide subject to formation of methyl radicals to a lesser degree than dicumyl peroxide at the free-radical reaction temperature, and a graftable stable organic free radical.

Examples of organic peroxides useful in the present invention include dialkyl peroxides. Preferably, the organic peroxide is a dialkyl peroxide selected from the group consisting of 2,5-bis(tert-butylperoxy)-2,5-dimethylhexane and 2,5-bis(tert-butylperoxy)-2,5-dimethyl-3-hexyne. More preferably, the organic peroxide is 2,5-bis(tert-butylperoxy)-2,5-dimethyl-3-hexyne.

The organic peroxide can be added via direct injection. Preferably, the free-radical inducing species is present in an amount between about 0.005 weight percent and about 20.0 weight percent, more preferably, between about 0.01 weight percent and about 10.0 weight percent, most preferably, between about 0.03 weight percent and about 5.0 weight percent.

In a preferred embodiment, the present invention is an article of manufacture prepared from the polymeric composition. Any number of processes can be used to prepare the articles of manufacture. Specifically useful processes include injection molding, extrusion, compression molding, rotational molding, thermoforming, blowmolding, powder coating, Banbury batch mixers, fiber spinning, and calendaring.

Suitable articles of manufacture include wire-and-cable insulations, wire-and-cable semiconductive articles, wire-and-cable coatings and jackets, cable accessories, shoe soles, multicomponent shoe soles (including polymers of different densities and type), weather stripping, gaskets, profiles, durable goods, rigid ultradrawn tape, run flat tire inserts, construction panels, composites (e.g., wood composites), pipes, foams, blown films, and fibers (including binder fibers and elastic fibers).

EXAMPLES

The following non-limiting examples illustrate the invention.

Comparative Example 1 and Example

A comparative example and one example of the present invention were prepared with a low density polyethylene having a melt index of 2.4 grams per 10 minutes, I21/I2 of 52, a density of 0.9200 grams per cubic centimeter, a polydispersity (Mw/Mn) of 3.54, and a melting point of 110.2 degrees Celsius. The goal was the preparation of a 2.0 weight percent 4-hydroxy-TEMPO grafted LDPE.

Prior to mixing, the polyethylene was dried under vacuum to remove any residual moisture. Each of the formulations shown in Table I, excluding the peroxide, was prepared in a Brabender mixer to make 40 grams samples at 125 degrees Celsius for 3 minutes. The peroxide was subsequently added. The composition was compounding for 4 additional minutes. The mixing bowl was purged with nitrogen.

The DXM-446 low density polyethylene was commercially available from The Dow Chemical Company. The 4-hydroxy TEMPO was commercially available from A.H. Marks. The Luperox™ 130 2,5-bis(tert-butylperoxy)-2,5-dimethyl-3-hexyne organic peroxide was commercially available from Atofina. The Dicup R™ dicumyl peroxide was commercially available from Geo Specialty Chemicals.

The test specimens were crosslinked by processing the samples for 15 minutes in a moving die rheometer (MDR) at 200 degrees Celsius, a frequency of 100 cycles per minute, and an arc of 0.5 degrees.

TABLE I

| Component | Comparative Example 1 | Example 2 |
|---|---|---|
| LDPE | 96.5 | 97.0 |
| 4-Hydroxy-TEMPO | 2.0 | 2.0 |
| Luperox 130 | | 1.0 |
| Dicumyl peroxide | 1.5 | |

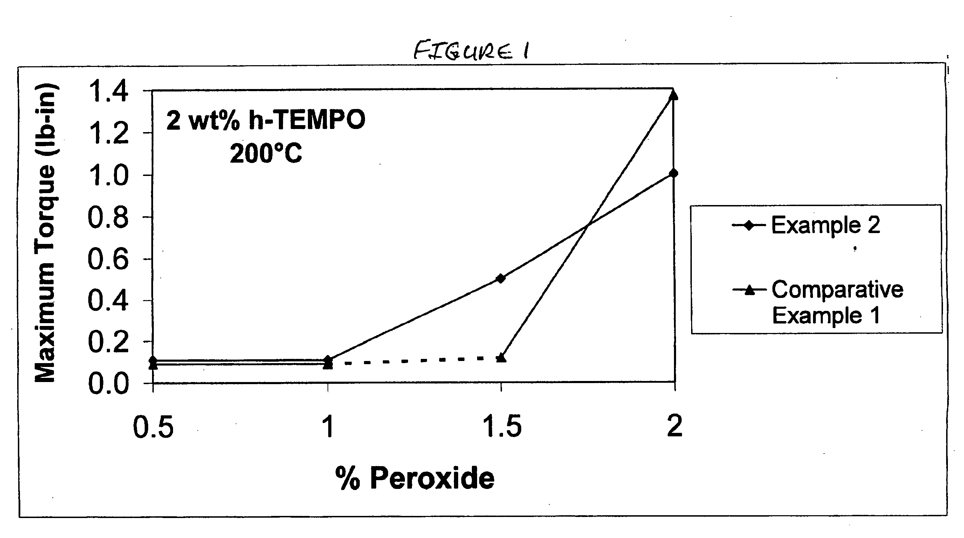

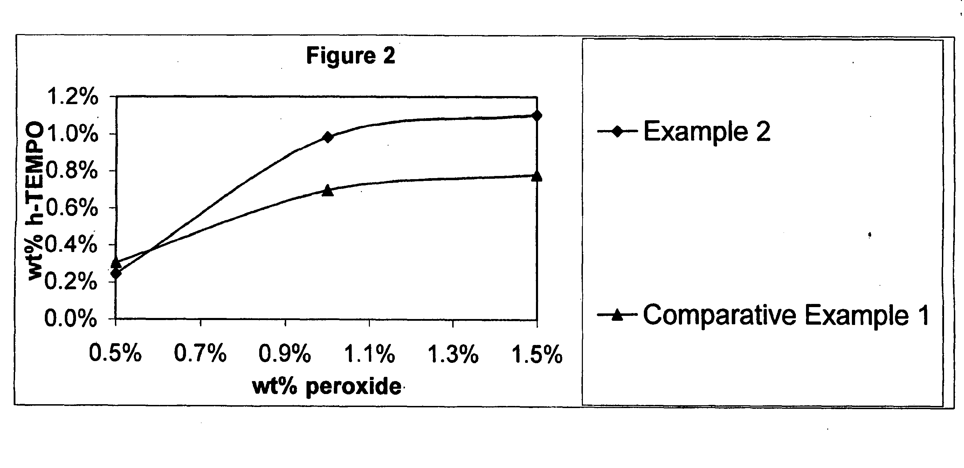

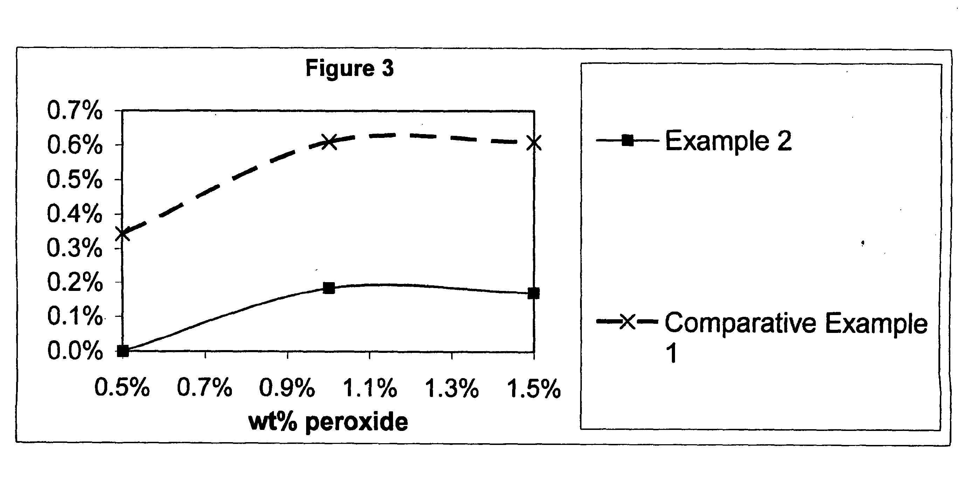

Figure 1 shows MDR torque data for various amounts of Luperox 130 organic peroxide and dicumyl peroxide containing compositions. Figure 2 shows the NMR data relating to the percent of grafted 4-hydroxy-TEMPO. Figure 3 shows the NMR data relating to the amount of methylation.

Embodiments of the invention are described in the following numbered claims

1. A polymeric composition comprising:

(a) a free-radical reactive polymer,
(b) an organic peroxide having a half-life, measured at least 130 degrees Celsius, longer than that of dicumyl peroxide, and
(c) a graftable stable organic free radical,

wherein the stable organic free radical (i) substantially suppresses degradation of the polymer in the presence of the free-radical inducing species and (ii) being graftable onto the polymer after the polymer forms a free radical.

2. A polymeric composition comprising:

(a) a free-radical reactive polymer,
(b) an organic peroxide having a half-life, measured at least 130 degrees Celsius, longer than that of dicumyl peroxide, and
(c) a graftable stable organic free radical,

wherein the stable organic free radical (i) substantially suppresses carbon-carbon crosslinking of the polymer in the presence of the free-radical inducing species and (ii) being graftable onto the polymer after the polymer forms a free radical.

3. A polymeric composition comprising:

(a) a free-radical reactive polymer,
(b) an organic peroxide subject to formation of methyl radicals to a lesser degree than dicumyl peroxide at the free-radical reaction temperature, and
(c) a graftable stable organic free radical,

wherein the stable organic free radical (i) substantially suppresses degradation of the polymer in the presence of the free-radical inducing species and (ii) being graftable onto the polymer after the polymer forms a free radical.

4. A polymeric composition comprising:

(a) a free-radical reactive polymer,
(b) an organic peroxide subject to formation of methyl radicals to a lesser degree than dicumyl peroxide at the free-radical reaction temperature, and
(c) a graftable stable organic free radical,

wherein the stable organic free radical (i) substantially suppresses carbon-carbon crosslinking of the polymer in the presence of the free-radical inducing species and (ii) being graftable onto the polymer after the polymer forms a free radical.

5. The polymeric composition of any of clauses 1 - 4 wherein the graftable stable organic free radical having a functional group.

6. The polymeric composition of clause 5 wherein the functional group is selected from the group consisting of a hydroxyl group, amino groups, carboxyl groups, and urethane groups.

**Claims**

1. A polymeric composition consisting essentially of (a) a free-radical degradable polymer, (b) a graftable stable organic free radical being a graftable, functionalized derivative of 2,2,6,6-tetramethyl piperindinyl oxy, and (c) an organic peroxide, being a dialkyl peroxide subject to formation of methyl radicals to a lesser degree than dicumyl peroxide at the free-radical reaction temperature, wherein (i) the graftable, stable organic free radical suppresses degradation of the polymer in the presence of the organic peroxide and (ii) the graftable stable organic free radical is graftable onto the polymer after the polymer forms a free radical.

2. A polymeric composition consisting essentially of (a) a free-radical crosslinkable polymer, (b) a graftable stable organic free radical being a graftable, functionalized derivative of 2,2,6,6-tetramethyl piperindinyl oxy, and (c) an organic peroxide, being a dialkyl peroxide subject to formation of methyl radicals to a lesser degree than dicumyl peroxide at the free-radical reaction temperature, wherein (i) the graftable, stable organic free radical suppresses carbon-carbon crosslinking of the polymer in the presence of the organic peroxide and (ii) the graftable stable organic free radical is graftable onto the polymer after the polymer forms a free radical.

3. The polymeric composition of Claim 1 or 2 wherein the functional group is selected from the group consisting of a hydroxyl group, amino groups, carboxyl groups, and urethane groups.

FIGURE 1

EP 2 050 793 A2

Figure 2

EP 2 050 793 A2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5272236 A
- US 5278272 A
- US 10139786 B
- WO 2003040442 A
- US 4666987 A
- US 4572819 A
- US 4585825 A
- US 3123655 A
- US 3346520 A
- US 3639522 A
- US 4409369 A